# FASCICULE DE BREVET EUROPEEN

(11) **EP 3 027 950 B1**
(45) Date de publication et mention de la délivrance du brevet: **11.07.2018**
(21) Numéro de dépôt: 14766525.1
(22) Date de dépôt: 30.07.2014
(51) Int. Cl.: F16L 53/34, F16L 53/38, F16L 58/16, G01B 7/02

(54) **BANDE DE RENFORCEMENT AMÉLIORÉE POUR LA RÉPARATION DES CANALISATIONS DE TRANSPORT DE FLUIDES**
VERBESSERTES VERSTÄRKUNGSBAND FÜR DIE REPARATUR VON FLÜSSIGKEITSFÖRDERLEITUNGEN
IMPROVED REINFORCEMENT STRIP FOR REPAIRING FLUID TRANSPORT PIPES

(30) Priorité: 30.07.2013 MC 2593
(43) Date de publication de la demande: 08.06.2016
(73) Titulaire: 3X Engineering, 98000 Monaco (MC)
(72) Inventeur: BOULET D'AURIA, Stanislas, 06230 Villefranche Sur Mer (FR); SLIMANI, Hacen, 06000 Nice (FR)
(74) Mandataire: Bonneau, Florence
(86) Numéro de dépôt international: PCT/IB2014/001413
(87) Numéro de publication internationale: WO 2015/015277

(56) Documents cités:
- EP-A1- 1 710 484
- WO-A1-2009/133404
- FR-A- 1 448 060
- FR-A1- 2 664 184
- FR-E- 73 579
- US-A- 4 797 604
- US-A1- 2004 231 789
- US-A1- 2011 139 351

## Description

### Domaine technique

La présente invention concerne la réparation des canalisations utilisées pour le transport de fluide tel que du pétrole et concerne en particulier une bande de renforcement améliorée pour la réparation des canalisations de transport de fluides.

### Etat de la technique

La réparation d'une canalisation de transport de fluide telle qu'un pipeline pour acheminer du pétrole, lorsqu'elle présente une dégradation, comporte toujours l'installation d'une bande de renforcement autour de la partie de la canalisation qui est dégradée. Cette bande de renforcement est généralement en matériau souple présentant de très bonnes propriétés mécaniques de traction telle qu'une grande résistance à la rupture. Un tel matériau est de préférence du Kevlar (marque déposée) de la famille des aramides ou de la fibre de verre.

Ainsi, le document EP 1710484 A1 décrit une bande de renforcement adaptée pour la réparation d'une canalisation de transport de fluide. De même les documents US 2004/231789 A1 et FR 2664184 A1 décrivent une méthode de réparation utilisant une bande de renforcement.

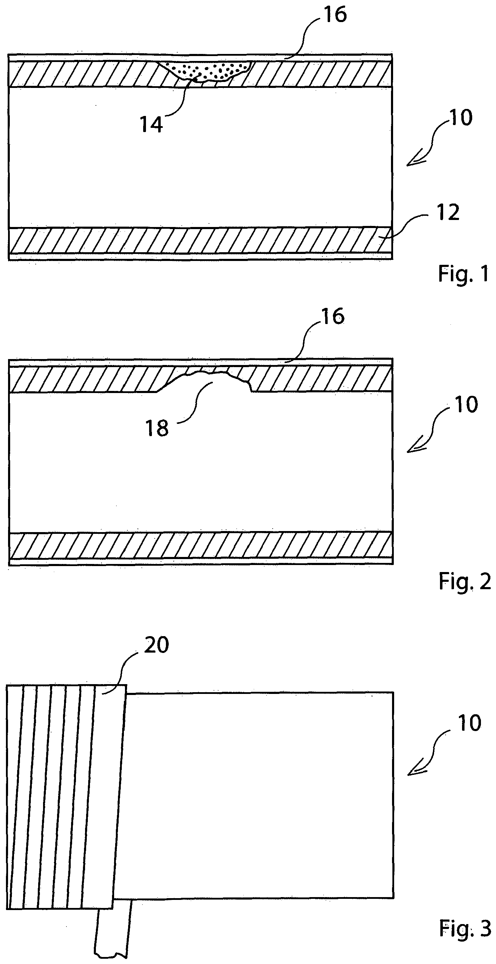

En référence à la figure 1, une partie de la canalisation 10 dont les parois 12 sont généralement en acier, comporte une portion dégradée 14 à sa périphérie. Pour la réparation, on commence par colmater la partie dégradée au moyen d'une résine polymère. Puis, on installe un manchon 16 qui recouvre la partie dégradée. Un tel manchon est constitué d'une bande de renforcement entourant la canalisation et recouverte d'une résine à réticulation au fur et à mesure qu'on enroule la bande de renforcement.

Un manchon 16 peut également être installé sur la partie d'une canalisation 10 comportant un amincissement 18 résultant d'une dégradation à l'intérieur de la canalisation comme représenté sur la figure 2.

La figure 3 montre comment est installée la bande de renforcement. Le début de la bande 20 est d'abord fixée sur la canalisation par tout moyen approprié. Puis la bande de renforcement est enroulée sous traction autour de la canalisation en recouvrant à chaque enroulement une partie de l'enroulement précédent, en général la moitié de la bande de renforcement.

Malheureusement, la plupart des canalisations servant au transport du pétrole en particulier sont enterrées dans le sol et ceci présente de nombreux inconvénients.

Ainsi, si la canalisation traverse un territoire soumis à de basses températures en hiver, l'application de la résine à réticulation n'est pas aisée dans la mesure où la polymérisation permettant à la résine d'avoir de bonnes caractéristiques d'adhérence, chimiques et mécaniques ne peut se produire correctement qu'à une température suffisante d'au moins 10°C.

Pour pallier ce problème, l'habitude est de recouvrir la canalisation d'une couverture chauffante après la mise en place de la bande imprégnée des ingrédients de la résine de façon à déclencher la polymérisation. Dans ce cas la chaleur vient de l'extérieur vers l'intérieur, et ce faisant une fiche couche de condensation se crée à l'interface entre la canalisation et la première couche de bande imprégnée. Il en résulte une mauvaise adhérence qui nuit à l'efficacité mécanique et chimique de la réparation et qui, en outre, produit une couche de rouille du fait de la mauvaise

D'autre part, de façon à vérifier le bon fonctionnement et l'état de la canalisation à intervalles réguliers, par exemple tous les 3 ans, on inspecte l'intérieur de la canalisation au moyen d'un outil appelé racleur instrumenté qui se déplace à l'intérieur de la canalisation.

Mais, lorsque la canalisation ayant été réparée est enterrée, on ne connaît pas l'endroit de la réparation. Lorsque le racleur instrumenté se trouve au droit de la partie réparée, il indique qu'il y a dégradation de la paroi, mais n'est pas en mesure de détecter qu'il y a eu réparation. En conséquence, le racleur instrumenté indique qu'il faudra effectuer une réparation après avoir déterré la canalisation, ce qui représente une opération inutile et très coûteuse.

Enfin, lorsqu'il y a eu dégradation de la canalisation, extérieurement ou intérieurement, l'amincissement de la partie dégradée évoluant dans le temps entraîne une augmentation du diamètre intérieur de la canalisation, ceci malgré qu'une réparation par installation d'un manchon a été effectuée. Cette augmentation de l'amincissement peut s'avérer très dangereuse du fait que la paroi de la canalisation peut se fissurer si le diamètre atteint une trop grande valeur sans qu'un nouveau manchon soit installé à cet endroit.

### Exposé de l'invention

C'est pourquoi le but de l'invention est de fournir une bande de renforcement pour la réparation des canalisations de transport de fluides qui permet d'effectuer aisément les opérations telles que l'installation d'un manchon, la détection de la partie de la canalisation comportant le manchon ou la détection des parties de la canalisation ayant subi une augmentation de diamètre due à un amincissement de la paroi de la canalisation.

L'objet principal de l'invention est donc une bande de renforcement adaptée pour la réparation d'une canalisation de transport de fluide au cours de laquelle la bande est enroulée sous traction autour de la portion de la canalisation où la réparation doit avoir lieu en même temps qu'une résine à réticulation est appliquée sur la bande de façon à constituer un manchon autour de la portion à réparer. La bande de renforcement comprend au moins un fil métallique intégré dans le sens longitudinal de la bande, les propriétés électriques du fil étant utilisées pour les opérations comprenant la réticulation de la résine, la détection de la portion de la canalisation comportant le manchon ou la détection des portions réparées de la canalisation ayant subi une augmentation de diamètre due à un amincissement de la paroi.

Un autre objet de l'invention est un procédé de réparation d'une portion dégradée d'une canalisation dans lequel un manchon installé sur la portion comprend une bande de renforcement mentionnée ci-dessus comprenant la mise sous tension du fil métallique intégré dans la bande de manière à produire une augmentation de température par effet joule pour atteindre une température minimale, par exemple 10°C, nécessaire pour déclencher la polymérisation de la résine à réticulation appliquée sur la bande.

Un autre objet de l'invention est un procédé de détection d'un manchon installé sur une portion dégradée d'une canalisation et comprenant une bande de renforcement mentionnée ci-dessus dans lequel un racleur instrumenté est déplacé à l'intérieur de la canalisation et transmet un champ magnétique, ce qui permet d'enregistrer une modification du champ magnétique due à la présence du fil métallique intégré dans la bande de manière à détecter le manchon et la portion réparée de la canalisation.

Un autre objet de l'invention est un procédé de détection d'une augmentation du diamètre due à un amincissement de la paroi d'une portion dégradée d'une canalisation comportant un manchon comprenant une bande de renforcement mentionnée ci-dessus dans lequel une tension est appliquée entre les extrémités du fil métallique intégré dans la bande de manière à mesurer la résistivité du fil dont la variation est fonction de l'augmentation de diamètre de la canalisation.

### Description brève des figures

Les buts, objets et caractéristiques de l'invention apparaîtront plus clairement à la lecture de la description qui suit faite en référence aux dessins dans lesquels :
la figure 1 représente une partie extérieure dégradée d'une canalisation sur laquelle on a effectué une réparation par installation d'un manchon ;
la figure 2 représente une partie intérieure dégradée d'une canalisation sur laquelle on a effectué une réparation par installation d'un manchon ;
la figure 3 représente la mise en place d'une bande de renforcement sur la partie dégradée d'une canalisation ;
la figure 4 représente schématiquement la bande de renforcement avec le fil métallique selon l'invention ; et
la figure 5 représente la partie de la canalisation sur laquelle a été installé un manchon avec les extrémités du fil métallique dépassant du manchon.

### Description détaillée de l'invention

Les figures 1 à 3 qui concernent une canalisation ayant une portion dégradée pour laquelle la réparation consiste à installer un manchon ont déjà été décrites dans l'état de la technique.

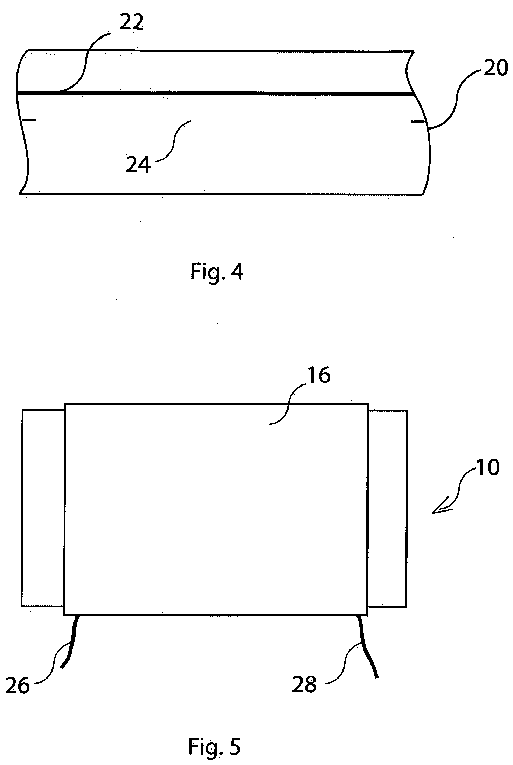

En référence à la figure 4, la bande de renforcement 20 qui peut être formée de plusieurs bandes de renforcement mises bout à bout, est composée d'un matériau souple présentant de très bonnes propriétés mécaniques de traction tel que du Kevlar, comprend un fil métallique 22, par exemple en acier, intégré à l'intérieur de la bande 20 dans le sens longitudinal de la bande.

A noter que la bande de renforcement pourrait comporter plusieurs fils métalliques. Dans ce cas, il est préférable que les fils soient tous situés d'un même côté de la ligne médiane 24 de manière à ce qu'il ne puisse pas se produire un court-circuit si le fil 22 affleure de la bande lorsqu'un enroulement est recouvert en partie (la moitié de préférence) par l'enroulement suivant (voir figure 3).

La canalisation 10 avec un manchon 16 comportant une bande de renforcement selon la présente invention est illustrée sur la figure 5. Comme on le voit sur la figure, les extrémités 26 et 28 du fil métallique 22 dépassent du manchon 16 de manière à être accessibles à la surface du sol lorsque la canalisation est enterrée.

Comme déjà mentionné ci-dessus, beaucoup de canalisations, et en particulier les pipelines pour le transport du pétrole, sont enterrées dans des territoires où la température descend en hiver au dessous de zéro. Quand le manchon est installé, la bande de renforcement est recouverte d'une résine à réticulation. Généralement, cette résine comporte deux composants qui se polymérisent en réticulant lorsque ils sont au contact de l'air. Mais cette réticulation ne se produit pas si la température descend au dessous d'une valeur minimale, par exemple 10°C.

En utilisant une bande de renforcement selon l'invention, il est possible de remédier à cet inconvénient en appliquant une basse tension entre les deux extrémités 26 et 28 du fil métallique de façon à faire passer un courant dans le fil métallique et provoquer ainsi une élévation de température par effet joule jusqu'à atteindre une température minimale, par exemple 10°C, pour déclencher la polymérisation de la résine.

Dès que l'enroulement sur la canalisation froide d'une première bande de renforcement imprégnée des ingrédients de la résine a été effectué, l'opérateur la met sous tension et peut continuer en enrubanner d'autres bandes sans se soucier de la température de la canalisation. Ceci évite la création d'une quelconque condensation

De plus une fois l'enrubannage terminé, en laissant sous tension et en protégeant la canalisation d'une toile isotherme, il suffit d'attendre que la bonne température de polymérisation soit atteinte, ce qui peut se faire grâce à un indicateur visuel tel qu'une étiquette thermosensible. De ce fait, on peut être certain de la parfaite polymérisation de l'ensemble des couches (qui peuvent aller jusqu'à 100, soit 50mm d'épaisseur).

Un autre avantage est la diminution du temps d'attente avant de revenir à la pression, temps d'attente qui est de 72h en général (temps nécessaire à la stabilisation de la résine) qui pourra ainsi être raccourci à quelques heures, ce qui correspond à des gains notables au niveau du prix de revient.

Lors de la mise en place des bandes de renforcement, une tension mécanique minimum de l'ordre de 6Kg, c'est à dire la force appliquée par un homme, est nécessaire entre 2 bandes, sachant que la nature de la bande n'est pas élastique.

Grace à la présence du fil (ou des fils) intégré dans la bande, il est possible de voir la différence entre une bande enrubannée mollement, c'est à dire avec une tension inférieure à 6 Kg, et une bande enrubannée énergiquement donc de vérifier si l'opérateur a respecté la procédure de mise en oeuvre. Il suffit en effet de mesurer la résistivité ohmique de la bande avant et après sa mise en place, la différence entre les deux mesures traduisant la tension durant l'enrubannage

A noter que, pour une réparation donnée, on calcule un nombre de couches nécessaires et donc une longueur de bande qui peut atteindre une centaine de mètres. Grâce à la résistivité du fil que l'on connaît, la mesure de la résistance indique la longueur totale de bande à appliquer.

Lorsque la canalisation ayant été réparée, on procède à l'inspection de la canalisation au moyen d'un racleur instrumenté qui se déplace à l'intérieur de la canalisation, le racleur instrumenté indique qu'il y a dégradation de la paroi lorsqu'il se trouve au droit de la partie réparée.

Grâce au fil métallique intégré dans la bande de renforcement, le racleur instrumenté détecte la présence du manchon. En effet, le racleur instrumenté comprend plusieurs moyens de mesure dont un moyen qui mesure le flux magnétique d'un aimant circulant dans la paroi de la canalisation entre les deux pôles de l'aimant. Du fait des enroulements de la bande de renforcement, le fil métallique intégré dans la bande de renforcement forme une bobine qui modifie le flux magnétique mesuré. En conséquence, il est aisé de détecter la présence d'un manchon qui indique que la canalisation a déjà été réparée.

Comme il a été mentionné précédemment, lorsqu'il y a eu une réparation suite à la dégradation de la canalisation, l'amincissement de la partie dégradée, même après réparation, entraîne une augmentation du diamètre de la canalisation qui peut s'avérer très dangereuse du fait que la paroi de la canalisation peut se fissurer si le diamètre atteint une trop grande valeur sans qu'un nouveau manchon soit installé à cet endroit. Il est donc nécessaire de vérifier, à intervalles réguliers, que le diamètre de la canalisation à l'endroit de la réparation n'a pas trop augmenté pour éviter une fissuration irrémédiable.

Comme la portion réparée de la canalisation comporte un manchon, une augmentation du diamètre de la canalisation a pour conséquence une augmentation du diamètre du manchon et donc du diamètre des spires formées par le fil métallique intégré dans la bande de renforcement qui se traduit par une augmentation de la longueur du fil métallique par étirement. Cette augmentation de la longueur du fil a pour effet d'augmenter la résistivité du fil. Par conséquent, pour connaître l'éventuelle augmentation du diamètre de la canalisation, il suffit de calculer la variation de résistivité du fil en appliquant une tension entre les extrémités 26 et 28 du fil (voir figure 5) et de mesurer la résistance du fil pour connaître sa résistivité.

## Revendications

1. Bande de renforcement (20) adaptée pour la réparation d'une canalisation de transport de fluide (10) au cours de laquelle ladite bande est enroulée sous traction autour de la portion de la canalisation (14) où la réparation doit avoir lieu en même temps qu'une résine à réticulation est appliquée sur ladite bande de façon à constituer un manchon (16) autour de ladite portion de la canalisation, ladite bande de renforcement comprenant un ou plusieurs fils métalliques intégrés (22) dans le sens longitudinal de la bande, lesdits fils étant utilisés lorsqu'ils sont mis sous tension, pour les opérations comprenant la réticulation de ladite résine, la détection de ladite portion de la canalisation comportant le manchon ou la détection des portions réparées de la canalisation ayant subi une augmentation de diamètre due à un amincissement de la paroi ;
ladite bande de renforcement étant **caractérisée en ce que** le ou lesdits fils sont intégrés dans seulement une moitié de ladite bande de manière à ce que, à chaque enroulement de la bande autour de la canalisation, la moitié comportant les fils soit superposée à la moitié de l'enroulement précédent ne comportant pas de fils de sorte qu'il ne puisse pas y avoir court-circuit entre les portions de fils des enroulements consécutifs.

2. Procédé de réparation d'une portion dégradée d'une canalisation (10) dans lequel un manchon (16) installé sur ladite portion comprend une bande de renforcement (20) selon la revendications 1, comprenant la mise sous tension du ou des fils métallique (22) intégrés dans ladite bande de manière à produire une augmentation de température par effet joule pour atteindre une température minimale, par exemple 10°C, nécessaire pour déclencher la polymérisation de la résine à réticulation appliquée sur ladite bande.

3. Procédé selon la revendication 2, dans lequel on mesure la résistivité ohmique de la bande de renforcement (20) avant et après sa mise en place, la différence entre les deux mesures traduisant la tension mécanique appliquée durant l'enrubannage.

4. Procédé selon la revendication 2, dans lequel la mesure de la résistance du ou desdits fils intégrés dont la résistivité est connue permet de déterminer la longueur totale de bande de renforcement (20) à appliquer.

5. Procédé de détection d'un manchon (16) installé sur une portion dégradée d'une canalisation (10) et comprenant une bande de renforcement (20) selon la revendication 1, ledit procédé étant **caractérisé en ce qu'**un racleur instrumenté est déplacé à l'intérieur de ladite canalisation, ledit racleur comprenant un aimant produisant un flux magnétique, ce qui permet d'enregistrer une modification dudit flux magnétique due à la présence du ou des fils métalliques intégrés dans ladite bande de manière à détecter le manchon et la portion réparée de la canalisation.

6. Procédé de détection d'une augmentation du diamètre due à un amincissement de la paroi d'une portion dégradée d'une canalisation (10) comportant un manchon (16) comprenant une bande de renforcement (20) selon la revendication 1, ledit procédé étant **caractérisé en ce qu'**une tension est appliquée entre les extrémités (26, 28) du ou des fils métalliques intégrés dans ladite bande de manière à mesurer la résistivité du ou desdits fils dont la variation est fonction de l'augmentation de diamètre de la canalisation.

## Patentansprüche

1. Verstärkungsband (20), welches für die Reparatur einer Flüssigkeitsförderleitung (10) geeignet ist, während der das Band unter Zug um den Abschnitt (14) der Leitung gewickelt wird, wo die Reparatur stattfinden soll, wobei gleichzeitig ein vernetzendes Harz auf das Band aufgebracht wird, um eine Manschette (16) um den Abschnitt der Leitung zu bilden, wobei das Verstärkungsband einen oder mehrere integrierte Metalldrähte (22) in der Längsrichtung des Bands umfasst, wobei die Drähte, wenn sie unter Spannung gesetzt werden, für Vorgänge verwendet werden, welche die Vernetzung des Harzes, die Detektion des Abschnitts der Leitung, der die Manschette umfasst, oder die Detektion reparierter Abschnitte der Leitung, die eine Zunahme des Durchmessers aufgrund einer Verdünnung der Wand eingegangen sind, umfassen;
wobei das Verstärkungsband **dadurch gekennzeichnet ist, dass** der Draht oder die Drähte nur in einer Hälfte des Bands integriert ist oder sind, so dass, bei jeder Wicklung des Bands um die Leitung, die Hälfte, welche die Drähte umfasst, über die Hälfte der vorhergehenden Wicklung gelegt wird, die keine Drähte umfasst, damit es zu keinem Kurzschluss zwischen den Abschnitten von Drähten aufeinanderfolgender Wicklungen kommen kann.

2. Verfahren zur Reparatur eines abgebauten Abschnitts einer Leitung (10), wobei eine Manschette (16), die auf dem Abschnitt aufgebracht wird, ein Verstärkungsband (20) nach Anspruch 1 umfasst, umfassend das Setzen des Metalldrahts oder der Metalldrähte (22) unter Spannung, die in dem Band integriert sind, um eine Erhöhung der Temperatur durch den Joule-Effekt zu erzeugen, um eine minimale Temperatur zu erreichen, beispielsweise 10°C, die notwendig ist, um die Polymerisation des vernetzenden Harzes auszulösen, das auf dem Band aufgebracht ist.

3. Verfahren nach Anspruch 2, wobei der ohmsche Widerstand des Verstärkungsbands (20) vor und nach seiner Platzierung gemessen wird, wobei die Differenz zwischen den beiden Messungen die mechanische Spannung, die während der Umhüllung ausgeübt wird, wiedergibt.

4. Verfahren nach Anspruch 2, wobei die Messung des Widerstands des integrierten Drahts oder der integrierten Drähte, deren Widerstand bekannt ist, die Bestimmung der Gesamtlänge des aufzubringenden Verstärkungsbands (20) ermöglicht.

5. Verfahren zur Detektion einer Manschette (16), die auf einem abgebauten Abschnitt einer Leitung (10) installiert ist und ein Verstärkungsband (20) nach Anspruch 1 umfasst, wobei das Verfahren **dadurch gekennzeichnet ist, dass** ein Molchinstrument im Inneren der Leitung verschoben wird, wobei der Molch einen Magneten umfasst, der einen Magnetfluss erzeugt, was das Aufzeichnen einer Modifikation des Magnetflusses aufgrund des Vorliegens des Metalldrahts oder der Metalldrähte ermöglicht, die in dem Band integriert sind, um die Manschette und den reparierten Abschnitt der Leitung zu detektieren.

6. Verfahren zur Detektion einer Zunahme des Durchmessers aufgrund einer Verschmälerung der Wand eines abgebauten Abschnitts einer Leitung (10), welche eine Manschette (16) umfasst, die ein Verstärkungsband (20) nach Anspruch 1 umfasst, wobei das Verfahren **dadurch gekennzeichnet ist, dass** eine Spannung zwischen den Enden (26, 28) des Metalldrahts oder der Metalldrähte angelegt wird, die in dem Band integriert sind, um den Widerstand des Drahts oder der Drähte zu messen, dessen Variation von der Zunahme des Durchmessers der Leitung abhängig ist.

## Claims

1. Reinforcing strip (20) suitable for repairing a fluid-transporting pipe (10), during which repair the said strip is wound under tension around the portion (14) of the pipe at which the repair is to be made at the same time as a polymerizable resin is applied to the said strip so as to constitute a sleeve (16) around the said portion of the pipe, the said reinforcing strip comprising one or more integrated metal wires (22) in the longitudinal direction of the strip, the said wires being used, when voltage is applied to them, for the operations comprising the polymerization of the said resin, detection of the said portion of the pipe comprising the sleeve or detection of the repaired portions of the pipe that have experienced an increase in diameter due to a thinning of the wall;
the said reinforcing strip being **characterized in that** the said wire or wires are integrated in just half of the said strip so that, on each turn of the winding of the strip around the pipe, the half comprising the wires is superposed on that half of the previous turn that does not contain wires, so that there can be no short circuit between the portions of wires of the consecutive turns.

2. Method for repairing a damaged portion of a pipe (10) in which a sleeve (16) installed on the said portion comprises a reinforcing strip (20) according to Claim 1, comprising applying voltage to the metal wire or wires (22) integrated into the said strip so as to produce an increase in temperature through a Joule heating effect in order to reach a minimum temperature, for example 10°C, necessary to initiate polymerization of the polymerizable resin applied to the said strip.

3. Method according to Claim 2, in which the resistivity of the reinforcing strip (20) before and after installation is measured, the difference between the two measurements being indicative of the mechanical tension applied during taping.

4. Method according to Claim 2, in which measuring the resistance of the said integrated wire or wires the resistivity of which is known makes it possible to determine the total length of reinforcing strip (20) to be applied.

5. Method for detecting a sleeve (16) installed on a damaged portion of a pipe (10) and comprising a reinforcing strip (20) according to Claim 1, the said method being **characterized in that** an instrumented pig is moved along inside the said pipe, the said pig comprising a magnet producing magnetic flux, so that a change in the said magnetic flux caused by the presence of the metal wire or wires integrated into the said strip can be recorded so as to detect the sleeve and the repaired portion of the pipe.

6. Method for detecting an increase in diameter caused by a thinning of the wall of a damaged portion of a pipe (10) comprising a sleeve (16) comprising a reinforcing strip (20) according to Claim 1, the said method being **characterized in that** a voltage is applied across the ends (26, 28) of the metal wire or wires integrated into the said strip so as to measure the resistivity of the said wire or wires, the variation of which resistivity is dependent on the increase of diameter of the pipe.
